# EUROPEAN PATENT APPLICATION

(11) **EP 2 711 529 A1**
(43) Date of publication of application: **26.03.2014**
(21) Application number: 12185277.6
(22) Date of filing: 20.09.2012
(51) Int. Cl.: F02F 3/00, F16J 1/08, F16J 9/00

(54) **Piston with oil reservoir**

(71) Applicant: MWM GmbH, 68167 Mannheim (DE)
(72) Inventor: Dembinski, Andreas, 55597 Wöllstein (DE); Aschenbrenner, Steven, 68623 Lampertheim (DE); Berger, Olaf, 67373 Dudenhofen (DE)
(74) Representative: Kramer - Barske - Schmidtchen

(57) **Abstract**

A piston (1) may comprise a piston body (4) having a piston skirt (6). The piston (1) may further comprise at least one piston ring groove (10, 12, 14) arranged in the piston skirt (6). A lowermost piston ring groove (14) may be arranged in a first plane (24) and at least one blind hole (22) may extend at least partially from the lowermost piston ring groove (14) into the piston body (4). Each blind hole (22) may act as an oil reservoir contributing to lubrication between the piston skirt (6) and a cylinder liner (2) during movement of the piston (1).

## Description

### Technical Field

The present disclosure generally relates to a piston and a method for manufacturing a piston, and more particularly to a piston with an oil reservoir and a method for manufacturing a piston with an oil reservoir.

### Background

Generally, pistons of engines are configured to reciprocate within a cylinder liner of a cylinder. Lubricant between an inner circumference of the cylinder liner and an outer circumference (also referred to as piston skirt) of the piston facilitates lubrication and cooling of the piston and the cylinder liner during operation of the engine.

For example, US 2008/0314241 A1 may disclose a piston provided with a field of rings. A circumferential radial recess may be located in a region below the field of rings. The circumferential recess may be subject to a special design to provide a large contact surface for an oil scraper ring and to reduce its weakening effect on the piston. As a side effect, oil may be collected by the circumferential recess, which may contribute to lubrication.

The present disclosure is directed, at least in part, to improving or overcoming one or more aspects of prior systems.

### Summary of the Disclosure

According to an aspect of the present disclosure, a piston for an engine may comprise a piston body having a piston skirt, at least one piston ring groove arranged in the piston skirt, a lowermost piston ring groove being arranged in a first plane, and at least one blind hole extending at least partially from the lowermost piston ring groove into the piston body, each blind hole extending along a longitudinal axis, each longitudinal axis being non-parallel with the first plane.

According to another aspect of the present disclosure, an engine may comprise at least one cylinder and an at least one piston as exemplarily disclosed herein, the piston being adapted to reciprocate within a corresponding cylinder.

According to yet another aspect of the present disclosure, a method for manufacturing a piston for an engine may comprise, providing a piston body with a piston skirt, providing at least one piston ring groove in the piston skirt, a lowermost piston ring groove being provided in a first plane, providing at least one blind hole extending at least partially from the lowermost piston ring groove into the piston body, each blind hole extending along a longitudinal axis, each longitudinal axis being non-parallel with the first plane.

Other features and aspects of this disclosure will be apparent from the following description and the accompanying drawings.

### Brief Description of the Drawings

Fig. 1 is a drawing of an exemplary piston;
Fig. 2 is a cut view of an exemplary embodiment of a piston ring groove with a piston ring and a blind hole;
Fig. 3 is a cut view of an exemplary embodiment of a piston ring groove with a blind hole; and
Fig. 4 is a top view on a plane perpendicular to a central longitudinal axis of an exemplary piston.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure may be based in part on the realization that at least one blind hole at least partially extending from a lowermost piston ring groove into a piston may provide an oil reservoir for lubrication. Specifically, a specific design of the at least one blind hole may facilitate lubrication between piston skirt and cylinder liner at a desired time, desired location and in a desired amount.

It is noted that a piston as exemplarily disclosed herein may be used in internal combustion engines, compressors, pumps and other machines comprising a piston with at least one piston ring groove and a piston ring (hereinafter referred to generally as engines). For purpose of clarity, an exemplary piston is described in connection with an internal combustion engine in the following.

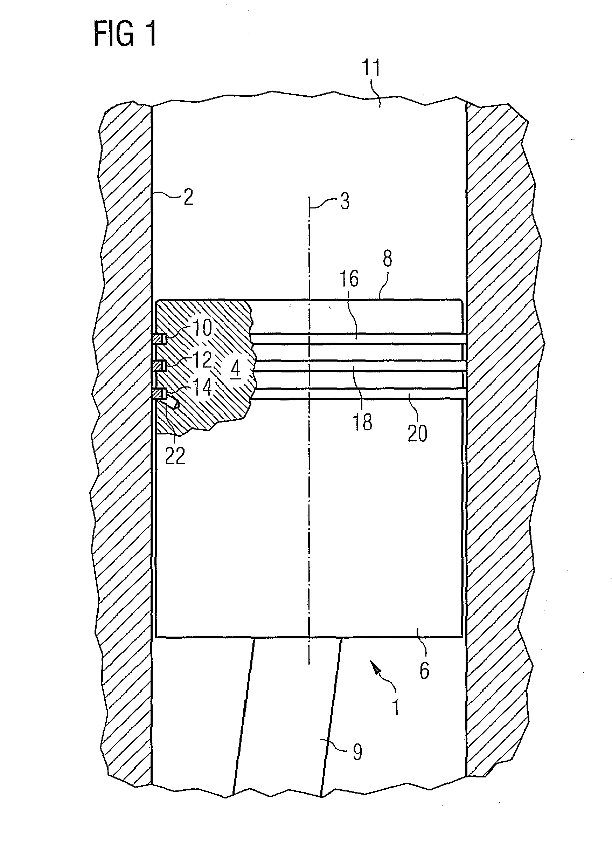

Referring to Fig. 1, an exemplary piston 1 in a cylinder liner 2 is shown. Piston 1 and cylinder liner 2 may be arranged within an engine block of an internal combustion engine (not shown).

The internal combustion engine may include features not shown, such as fuel systems, air systems, cooling systems, peripheries, drivetrain components, etc. Furthermore, internal combustion engine may be of any size, with any number of cylinders, and in any configuration ("V," in-line, radial, etc.). The internal combustion engine may be used to power any machine or other device, including locomotive applications, on-highway trucks or vehicles, off-highway trucks or machines, earth moving equipment, generators, aerospace applications, marine applications, pumps, stationary equipment, or other engine powered applications.

Piston 1 comprises a central longitudinal axis 3. Furthermore, piston 1 comprises a piston body 4 with a piston skirt 6, a piston top 8, and a plurality of piston rings. Furthermore, piston 1 is connected via a piston rod 9 to a crankshaft (not shown) of the internal combustion engine, and is adapted to reciprocate in cylinder liner 2 during operation of the internal combustion engine.

Piston top 8 defines a combustion chamber 11 together with cylinder liner 2 and a cylinder head (not shown).

Piston skirt 6 defines an outer circumference of piston body 4. A plurality of piston ring grooves extends circumferentially around piston body 4 in piston skirt 6. Specifically, an upper piston ring groove 10, an intermediate piston groove 12 and a lower piston ring groove 14 are arranged in piston skirt 6. The lower piston ring groove 14 is compared to the other piston ring grooves furthest spaced from piston top 8. In other words, in this exemplary embodiment, lower piston ring groove 14 is the lowermost piston ring groove.

Each of the plurality of piston rings is arranged in a corresponding piston ring groove. Specifically, compression ring 16 is arranged in upper piston ring groove 10, intermediate ring 18 is arranged in intermediate piston ring groove 12, and oil scraper ring 20 is arranged in lower piston ring groove 14.

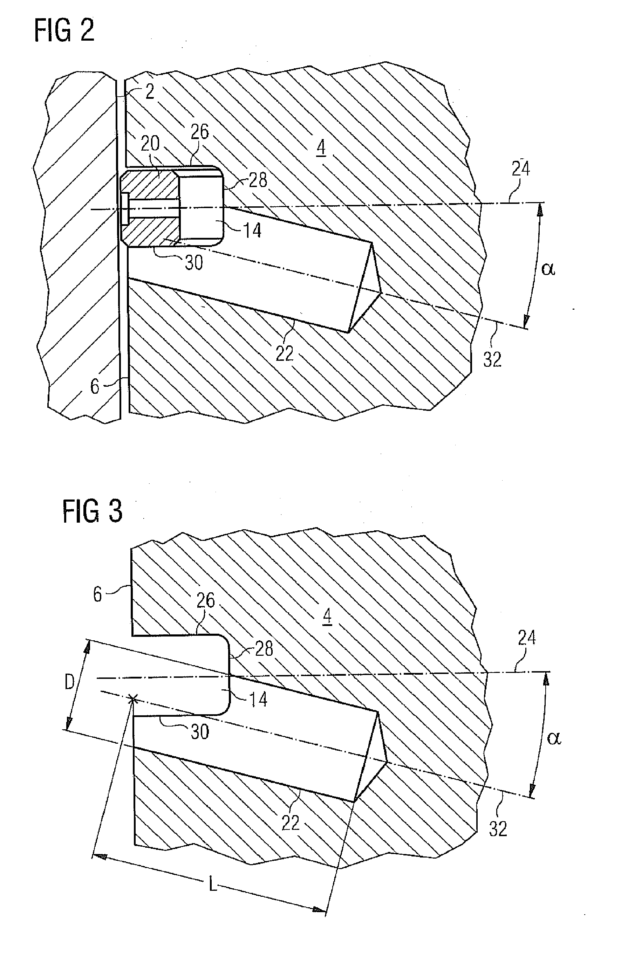

Piston 1 further comprises at least one blind hole 22. Blind hole 22 extends partially from the lower piston ring groove 14 into piston body 4 as is described in greater detail later on with reference to Figs. 2 to 4.

In some embodiments, a piston may comprise another quantity of piston ring grooves and corresponding piston rings than shown in Fig. 1. In each configuration, at least one blind hole may extend at least partially from a lowermost piston ring groove into a piston body.

In some embodiments, an engine may comprise at least one cylinder, each cylinder having a piston as exemplarily disclosed herein. Each piston may be adapted to reciprocate within a corresponding cylinder.

Turning to Fig. 2, an oil scraper ring 20 in lower piston ring groove 14, and blind hole 22 are shown in greater detail.

Lower piston ring groove 14 is arranged in a first plane 24. In other words, the lowermost piston ring groove is arranged in first plane 24. First plane 24 is perpendicular to central longitudinal axis 3 of piston 1.

Lower piston ring groove 14 comprises an upper wall 26, a back wall 28, and a lower wall 30. Oil scraper ring 20 is arranged between upper wall 26, back wall 28, and lower wall 30 in piston ring groove 14.

Blind hole 22 extends from piston skirt 6 and lower piston ring groove 14 into piston body 4. Specifically, blind hole 22 partially extends from back wall 28 and lower wall 30 of lower piston ring groove 14, and from a section of piston skirt 6 located directly below lower piston ring groove 14 into piston body 4.

In some embodiments, at least one blind hole may partially extend from an upper wall, a back wall, and/or a lower wall of a lowermost piston ring groove into a piston body.

Blind hole 22 extends in a direction away from piston top 8 (see Fig. 1) along a longitudinal axis 32 into piston body 4. Longitudinal axis 32 is non-parallel with the first plane 24 of lower piston ring groove 14. Instead, longitudinal axis 32 and first plane 24 confine an angle α.

In some embodiments, a longitudinal axis of a blind hole and a first plane of a lowermost piston ring groove may confine an angle α within a range of 5° to 45°, for example, 15°.

In some embodiments, each blind hole may have a longitudinal axis directed away from a piston top. In alternative embodiments, each blind hole may have a longitudinal axis directed to a piston top. In other alternative embodiments, at least one blind hole may have a longitudinal axis directed away from a piston top, and at least one blind hole may have a longitudinal axis directed to the piston top.

In some embodiments, each angle α may be equally sized. Alternatively, at least one angle α may not be equally sized with at least one other angle α.

Furthermore, blind hole 22 radially extends into piston body 4. In other words, longitudinal axis 32 of blind hole 22 intersects central longitudinal axis 3 of piston 1.

In some embodiments, at least one blind hole may not extend radially into a piston body such that a longitudinal axis of said blind hole may not intersect a central longitudinal axis of a piston.

Referring now to Fig. 3, lower piston ring groove 14 is shown without showing oil scraper ring 20 for purposes of clarity to illustrate an exemplary geometry of blind hole 22 in greater detail.

Blind hole 22 extends into piston body 4 along a depth L. Depth L may be chosen depending on various parameters such as piston diameter, piston wall thickness, desired oil reservoir volume of blind hole 22, location of blind hole 22, angle α, a blind hole diameter D, and/or overall number of blind holes 22. For example, Depth L may be within a range of 10 mm to 25 mm, for example, 15 mm.

Furthermore, blind hole 22 has a diameter D. Similarly to depth L, diameter D may be chosen depending on various parameters such as piston diameter, piston wall thickness, desired oil reservoir volume of blind hole 22, location of blind hole 22, of angle α, depth L, and/or overall number of blind holes 22. For example, diameter D may be within a range of 3 mm to 12 mm, for example, 6 mm.

In some embodiments, each blind hole may have the same depth and/or the same diameter. Alternatively, at least one blind hole may have another depth and/or diameter compared to at least one other blind hole.

It is noted that depth L, diameter D, and angle α have a direct impact on the oil reservoir volume of a blind hole. Naturally, the larger depth L, diameter D, and angle α may be, the larger an oil reservoir of a blind hole may be.

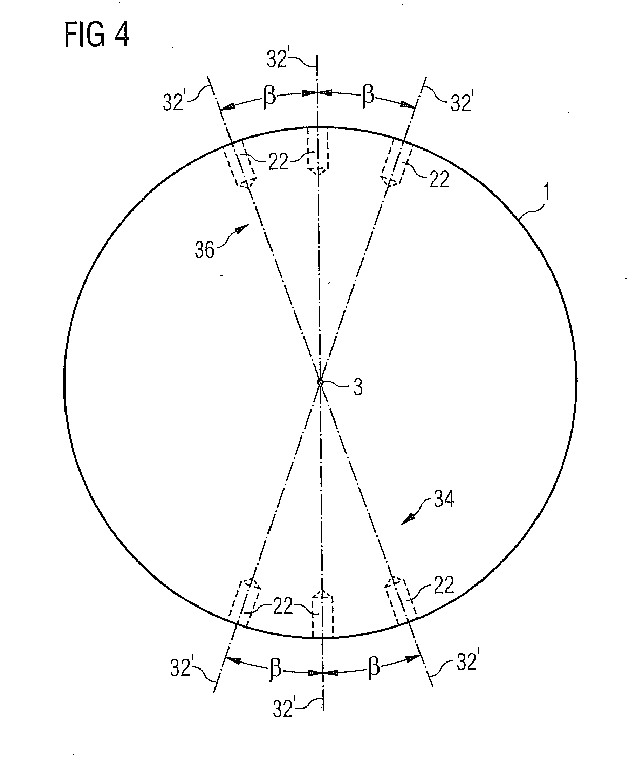

Fig. 4 shows an exemplary piston 1 comprising a plurality of blind holes 22.

It is noted that for purposes of clarity, blind holes 22 are indicated by dashed lines. However, blind holes 22 are not located in the shown plane of projection. As already outlined above, each blind hole 22 extends into piston body 4 at least partially from lower piston ring groove 14 (see, for example, Fig. 2). In the shown configuration, each blind hole 22 extends radially into piston body 4. However, as described above, in some embodiments, at least one blind hole may not extend radially into a piston body.

As already described, each blind hole 22 extends into piston body 4 along a longitudinal axis. Fig. 4 now shows projections of said longitudinal axes 32 on the plane of projection. Said projections are indicated by reference signs 32'. The plane of projection is perpendicular to central longitudinal axis 3 of piston 1. Further, the plane of projection is parallel with first plane 24.

Piston 1 comprises a first set of blind holes 34 and a second set of blind holes 36. First set of blind holes 34 includes three blind holes 22, and second set of blind holes 36 includes three blind holes 22.

First set of blind holes 34 is arranged opposite to second set of blind holes 36 with respect to central longitudinal axis 3 of piston 1.

In some embodiments, a first set of blind holes may comprise at least one blind hole, and/or a second set of blind holes may comprise at least one blind hole.

Projection 32' of longitudinal axis 32 of each blind hole 22 of first set of blind holes 34 on the plane of projection confines an angle β with projection 32' of longitudinal axis 32 of a neighboring blind hole 22 of first set of blind holes 34 on the plane of projection or, in other words, on first plane 24, respectively.

Similarly, projection 32' of longitudinal axis 32 of each blind hole 22 of second set of blind holes 36 on the plane of projection confines angle β with projection 32' of longitudinal axis 32 of a neighboring blind hole 22 of second set of blind holes 36 on the plane of projection or, in other words, on first plane 24, respectively.

Angle β is chosen depending on various parameters such as overall number of blind holes 22. For example, angle β may be within the range of 5° to 180°, for example, 20°.

In some embodiments, each angle β may be equally sized. Alternatively, at least one angle β may not be equally sized with another angle β.

### Industrial Applicability

Hereinafter, functionality of at least one blind hole 22 extending at least partially from the lowermost piston ring groove into piston body 4 is described with reference to Figs. 1 to 4.

During operation of the internal combustion engine, piston 1 reciprocates in cylinder liner 2. Specifically, piston 1 reciprocates between a top dead centre (TDC) and a bottom top centre (BDC) in cylinder liner 2. As known by those skilled in the art, a velocity of piston 1 is constantly changing during upstroke and downstroke. For example, piston 1 decelerates before arriving TDC and BDC, respectively.

Besides further functions, compression ring 16 and, in particular, intermediate ring 18 perform the precision work of lubrication such as oil distribution and film thickness adjustment. Oil scraper ring 20 performs the rough work of oil distribution and helps to scrape oil from cylinder liner 2 back to a crankcase from where oil is excessively provided onto cylinder liner 2

As each blind hole 22 extends along a longitudinal axis 32 that is non-parallel with first plane 24 of lower piston ring groove 14, each blind hole 22 fills with oil if piston 1 moves from BDC to TDC. Thus, each blind hole 22 collects oil to act as an oil reservoir. Specifically, each blind hole 22 fills with oil removed from the cylinder liner 2 by oil scraper ring 20 during the downstroke.

In the case of longitudinal axis 32 of blind hole 22 being directed away from piston top 8 (as shown in Fig. 1), oil within blind hole 22 is provided between piston skirt 6 and cylinder liner 2 if piston 1 reaches TDC. Specifically, before arriving TDC, piston 1 decelerates and oil pours out of each said blind hole 22. Said oil pouring out contributes to lubrication between cylinder liner 2 and piston skirt 6. At this stage, lubrication is particularly important, because fuel is ignited when piston 1 is close to TDC. Ignition and further combustion of fuel in combustion chamber 11 results in a considerable high load and temperature acting on piston 1 accelerating towards BDC.

It is noted that oil from each blind hole 22 is provided directly in a region of lower piston ring groove 14 and oil scraper ring 20. The provided oil may be further finely distributed between piston skirt 6 and cylinder liner 2 by intermediate ring 18 and compression ring 16 as described above. Thereby, the provided oil may ensure lubrication and support heat transfer in said specific region.

Depending on angle α, depth L, and/or diameter D, oil contained in each blind hole 22 may be enough to further pour out if piston 1 starts to move from TDC to BDC.

Furthermore, depending on the location of each blind hole 22 along a circumference of lower piston ring groove 14, specific regions of piston skirt 6 may be provided with oil from blind holes 22. For example, one or more blind hole may be located in a region that may be particularly exposed to high temperatures.

In the case of longitudinal axis 32 of blind hole 22 being directed to piston top 8, oil is provided from said blind holes 22 if piston 1 reaches the BDC. Specifically, before arriving BDC, piston 1 decelerates, and oil from said blind holes 22 will start to pour out and contribute to lubrication. Similarly to the above said, depending on angle α, depth L, and/or diameter D, oil contained in each blind hole 22 may be enough to further pour out if piston 1 starts to move from BDC to TDC.

In the following, a method for manufacturing a piston as exemplarily disclosed herein is described.

A method for manufacturing piston 1 for an engine comprises, providing piston body 4 with piston skirt 6, and providing at least one piston ring groove 10, 12, 14 in piston skirt 6. The lowermost piston ring groove 14 is provided in a first plane 24. The method further comprises, providing at least one blind hole 22 extending at least partially from lowermost piston ring groove 14 into piston body 4, each blind hole 22 extending along longitudinal axis 32, each longitudinal axis 32 being non-parallel with first plane 24.

The method step of providing at least one blind hole 22 may further comprise, providing at least one blind hole 22 radially extending into piston body 4.

In an alternative method, the method step of providing at least one blind hole 22 may comprise, providing at least one blind hole 22 not radially extending into piston body 4. Said blind hole may have a longitudinal axis 32 not intersecting central longitudinal axis 3 of piston

The method step of providing piston body 4 may further comprise, providing piston top 8, and wherein the method step of providing at least one blind hole 22 may comprise, providing each blind hole of the at least one blind hole 22 extending into piston body 4 in a direction away from or directed to piston top 8, each longitudinal axis 32 confining angle α with first plane 24 within the range of 5° to 45°.

The method step of providing at least one piston ring groove 10, 12, 14 may comprise, providing back wall 28 and lower wall 30 in lowermost piston ring groove 14, and wherein the method step of providing at least one blind hole 22 may comprise, providing at least one blind hole 22 at least partially extending from back wall 28, and/or lower wall 30 into piston body 4.

Although the preferred embodiments of this invention have been described herein, improvements and modifications may be incorporated without departing from the scope of the following claims.

## Claims

1. A piston (1) for an engine, the piston (1) comprising:
a piston body (4) having a piston skirt (6);
at least one piston ring groove (10, 12, 14) arranged in the piston skirt (6), a lowermost piston ring groove (14) being arranged in a first plane (24); and
at least one blind hole (22) extending at least partially from the lowermost piston ring groove (14) into the piston body (4), each blind hole (22) extending along a longitudinal axis (32), each longitudinal axis (32) being non-parallel with the first plane (24).

2. The piston (1) of claim 1, wherein the at least one blind hole (22) radially extends into the piston body (4).

3. The piston (1) of claim 1 or 2, wherein the piston body (4) further comprises:
a piston top (8), and
each blind hole of the at least one blind hole (22) extending into the piston body (4) in a direction away from or directed to the piston top (8), each longitudinal axis (32) confining an angle (α) with the first plane (24) within the range of 5° to 45°.

4. The piston of claim 3, wherein each angle (α) is equally sized within the range of 5° to 45°.

5. The piston (1) of any one of claims 1 to 4, wherein the lowermost piston ring groove (14) comprises a back wall (28), and a lower wall (30),
and the at least one blind hole (22) at least partially extending from the back wall (28) and/or the lower wall (30) into the piston body (4).

6. The piston (1) of any one of claims 1 to 5, wherein the at least one blind hole (22) has a depth (L) within the range of 10 mm to 25 mm,

7. The piston of any one of claims 1 to 6, wherein the at least one blind hole (22) has a diameter (D) within the range of 3 mm to 12 mm.

8. The piston (1) of any one of claims 1 to 7, wherein the at least one blind hole (22) comprises a first set of blind holes (34) and a second set of blind holes (36), the second set of blind holes (36) being arranged opposite to the first set of blind holes (34) with respect to a central longitudinal axis (3) of the piston (1).

9. The piston (1) of claim 8, wherein a projection of the longitudinal axis (32) of each blind hole of the first set of blind holes (34) on the first plane (24) confines an angle (β) with a projection of the longitudinal axis (32) of a neighboring blind hole of the first set of blind holes (34) on the first plane (24) within the range of 5° to 180°; and/or
a projection of the longitudinal axis (32) of each blind hole of the second set of blind holes (36) on the first plane (24) confines an angle (β) with a projection of the longitudinal axis (32) of a neighboring blind hole of the second set of blind holes (36) on the first plane (24) within the range of 5° to 180°.

10. The piston (1) of claim 8 or 9, wherein the first set of blind holes (34) includes three blind holes, and a projection of the longitudinal axis (32) of each blind hole of the first set of blind holes (34) on the first plane (24) confining an angle (β) with a projection of the longitudinal axis (32) of a neighboring blind hole of the first set of blind holes (34) on the first plane (24) of 20°, and
the second set of blind holes (36) includes three blind holes; and a projection of the longitudinal axis (32) of each blind hole of the second set of blind holes (36) on the first plane (24) confining an angle (β) with a projection of the longitudinal axis (32) of a neighboring blind hole of the second set of blind holes (36) on the first plane (24) of 20°.

11. An engine, comprising:
at least one cylinder; and
at least one piston (1) according to any one of claims 1 to 10, each piston (1) being adapted to reciprocate within a corresponding cylinder.

12. A method for manufacturing a piston (1) for an engine, the method comprising
providing a piston body (4) with a piston skirt (6);
providing at least one piston ring groove (10, 12, 14) in the piston skirt (6), a lowermost piston ring groove (14) being provided in a first plane (24),
providing at least one blind hole (22) extending at least partially from the lowermost piston ring groove (14) into the piston body (4), each blind hole (22) extending along a longitudinal axis (32), each longitudinal axis (32) being non-parallel with the first plane (24).

13. The method of claim 12, wherein the method step of providing at least one blind hole (22) comprises:
providing the at least one blind hole (22) radially extending into the piston body (4).

14. The method of claim 12 or 13, wherein the method step of providing a piston body (4) comprises:
providing a piston top (8);
and wherein the method step of providing at least one blind hole (22) comprises:
providing each blind hole of the at least one blind hole (22) extending into the piston body (4) in a direction away from or directed to the piston top (8), each longitudinal axis (32) confining an angle (α) with the first plane (24) within the range of 5° to 45°.

15. The method of any one of claims 11 to 14, wherein the method step of providing at least one piston ring groove (10, 12, 14) comprises:
providing a back wall (28) and a lower wall (30) in the lowermost piston ring groove (14);
and wherein the method step of providing at least one blind hole (22) comprises:
providing the at least one blind hole (22) at least partially extending from the back wall (28), and/or the lower wall (30) into the piston body (4).
